# EUROPEAN PATENT APPLICATION

(11) **EP 2 458 824 A1**
(43) Date of publication of application: **30.05.2012**
(21) Application number: 10832655.4
(22) Date of filing: 24.11.2010
(51) Int. Cl.: H04L 29/12, H04L 29/06

(54) **METHOD AND SYSTEM FOR ALLOCATING IP ADDRESS**

(30) Priority: 27.11.2009 CN 200910250401
(71) Applicant: ZTE Corporation, Shenzhen, Guangdong 518057 (CN)
(72) Inventor: CAI, Zhiguo, Guangdong 518057 (CN); ZHAO, Zhenfu, Guangdong 518057 (CN); SHI, Yunzhao, Guangdong 518057 (CN)
(74) Representative: Manitz, Gerhart
(86) International application number: PCT/CN2010/079085
(87) International publication number: WO 2011/063748

(57) **Abstract**

The present invention provides a method and system for allocating an IP address. The method comprises: a client supporting Internet Protocol version 4 (IPv4) transmitting a request message to a Dynamical Host Configuration Protocol version 6 (DHCPv6) server to request allocation of an IPv4 address, the request message carrying Identity Association (IA)_IPv4 options; and the DHCPv6 server allocating the IPv4 address to the client according to an address allocation strategy based on the IA-IPv4 options after receiving the request message, and transmitting the allocated IPv4 address to the client. In an IPv4/IPv6 dual protocol stack environment, the present invention allows the system to dynamically configure the IPv4 address flexibly and easily to reduce the dependency of IPv4 services on a DHCPv4 protocol in the dual stack environment.

## Description

### Technical Field

The present invention relates to the field of communication technologies, and in particular, to a method and system for allocating an IP address.

### Background of the Related Art

The rapid development of Internet Protocol version 4 (IPv4) networks inevitably expose limitations of the IPv4 networks. In order to solve deficiencies of the IPv4 networks in terms of address spaces, performance, and securities, etc., the next generation Internet Protocol version 6 (IPv6) protocol is extended.

Since the next generation IPv6 networks are still in an initial development stage, when a series of IPv6 network based technology applications are deployed, it is inevitable that the IPv6 networks will coexist with the IPv4 networks for a considerably long time, until the IPv6 networks finally replace the IPv4 networks completely.

An IPv6 address can be dynamically configured using Dynamic Host Configuration Protocol (DHCP) v6. However, because DHCPv4 and DHCPv6 protocols are different in design, they can not be upgraded and switched smoothly. Therefore, in environments where IPv4 and IPv6 protocol stacks coexist, at present two different address allocation mechanisms are used separately for the DHCPv4 and the DHCPv6.

The DHCPv4 and DHCPv6 protocols coexisting inevitably increases maintenance costs, system load and unstable factors.

### Summary of the Invention

An object of the present invention is to provide a method and system for allocating an IP address so as to solve defects, such as high maintenance costs and large system load, caused by coexistence of DHCPv4 and DHCPv6, and implement allocation of the IPv4 address by the DHCPv6.

In order to solve the above technical problem, the present invention provides a method for allocating an IP address comprising the step of:
a client supporting Internet Protocol version 4 (IPv4) transmitting a request message to a Dynamical Host Configuration Protocol version 6 (DHCPv6) server to request allocation of an IPv4 address, the request message carrying Identity Association (IA)_IPv4 options; and
the DHCPv6 server allocating the IPv4 address to the client according to an address allocation strategy based on the IA-IPv4 options after receiving the request message, and transmitting the allocated IPv4 address to the client.

In the method, the DHCPv6 server can transmit the IPv4 address to the client by carrying the IA_IPv4 options in a response message and extending the IPv4 address allocated to the client which is carried in IPv4 address options under the IA_IPv4 options. The client can be connected to the DHCPv6 server through a relay device. The method may further comprise: the relay device receiving the request message transmitted by the client, re-encapsulating the request message after parsing the IA_IPv4 options carried in the request message, inserting IPv4 gateway address options in the re-encapsulated message and transmitting the re-encapsulated message to the DHCPv6 server. The step of the DHCPv6 server allocating the IPv4 address to the client according to the address allocation strategy may comprise: the DHCPv6 server receiving the re-encapsulated message from the relay device, and allocating the IPv4 address to the client according to the address allocation strategy based on an IPv4 gateway address in the IPv4 gateway address options encapsulated by the relay device after parsing the IA_IPv4 options.

The method may further comprise: the DHCPv6 server extending the IPv4 gateway address options in the IPv4 address options extended under the IA_IPv4 options carried in the response message, the IPv4 gateway address options containing the IPv4 gateway address, and the IPv4 gateway address being an IPv4 gateway address contained in the IPv4 gateway address options encapsulated by the relay device.

The method may further comprise: the DHCPv6 server extending the IPv4 gateway address options in the IPv4 address options extended under the IA_IPv4 options carried in the response message, the IPv4 gateway address options containing the IPv4 gateway address, and the IPv4 gateway address being an IPv4 address of the DHCPv6 server or a pre-configured IPv4 gateway address.

The method may further comprise: the client receiving the response message, determining whether the IA_IPv4 options exist in the response message, and if the IA_IPv4 options exist and the IPv4 address options is carried in the IA_IPv4 options, transmitting a acknowledge message to the DHCPv6 server, the acknowledge message carrying a DHCP Unique Identifier (DUID) of the DHCPv6 server and the IA_IPv4 options, the IA_IPv4 options carrying the IPv4 address options; the DHCPv6 server checking whether the DUID contained in the message is its own DUID after receiving the acknowledge message, and if yes, allocating the IPv4 address in the IPv4 address options carried under the IA_IPv4 options to the client and transmitting a reply message to the client. The method may further comprise: the DHCPv6 server carrying the IA_IPv4 options in the reply message, carrying the IPv4 address options under the IA_IPv4 options, and carrying the IPv4 gateway address options under the IPv4 address options, the IA_IPv4 options containing a lease term, the IPv4 address options containing a life period, and the IPv4 gateway address options containing the IPv4 gateway address; after receiving the reply message, the client initiating an address parse protocol (ARP) request, detecting whether the IPv4 address carried in the IPv4 address options is available, and if available, recording the lease term and the life period, and configuring and using the IPv4 address and IPv4 gateway address.

In the method, if the client requests the DHCPv6 server to allocate a particular IPv4 address, the client can contain the particular IPv4 address into the IPv4 address options carried in the IA_IPv4 options when transmitting the request message. The method may further comprise: the DHCPv6 server parsing the particular IPv4 address carried in the IPv4 address options, checking whether the IPv4 address is available, and if available, directly allocating the IPv4 address to the client.

If the client requests a particular IPv4 gateway address from the DHCPv6 server, the client can carry the IPv4 gateway address options in the IPv4 address options carried under the IA_IPv4 options when transmitting the request message, the IPv4 gateway address options containing the particular IPv4 gateway address. The method may further comprise: when transmitting the IPv4 address allocated to the client through the response message to the client, the DHCPv6 server carrying the IPv4 gateway address options under the IPv4 address options of the IA_IPv4 options carried in the response message, the IPv4 gateway address options containing the designated IPv4 gateway address.

The present invention further provides a system for allocating an IP address comprising a client supporting IPv4 and a DHCPv6 server, wherein
the client supporting the IPv4 is configured to transmit a request message to the DHCPv6 server to request allocation of an IPv4 address, the request message carrying Identity Association (IA)_IPv4 options; and
the DHCPv6 server is configured to allocate the IPv4 address to the client according to an address allocation strategy based on the IA-IPv4 options after receiving the request message, and transmit the allocated IPv4 address to the client.

The DHCPv6 server may be configured to transmit the allocated IPv4 address to the client by carrying the IA_IPv4 options in a response message transmitted to the client and extending the IPv4 address allocated to the client which is carried in the IPv4 address options under the IA_IPv4 options.

The system may further comprise a relay device configured to connect the client with the DHCPv6 server, receive the request message transmitted by the client, re-encapsulate the request message after parsing the IA_IPv4 options carried in the request message, insert IPv4 gateway address options in the re-encapsulated message and transmit the re-encapsulated message to the DHCPv6 server. The DHCPv6 server may be configured to allocate the IPv4 address to the client according to the address allocation strategy based on information of the IPv4 gateway address options encapsulated by the relay device after parsing the IA_IPv4 options. The DHCPv6 server may be further configured to extend the IPv4 gateway address options in the IPv4 address options extended under the IA_IPv4 options carried in the response message, the extended IPv4 gateway address options carrying an IPv4 gateway address, and the IPv4 gateway address being an IPv4 gateway address in the IPv4 gateway address options encapsulated by the relay device or an IPv4 address of the DHCPv6 server or an pre-configured IPv4 gateway address.

In conclusion, in an IPv4/IPv6 dual protocol stack environment, the present invention allows the system to dynamically configure the IPv4 address flexibly and easily to reduce the dependency of IPv4 services on a DHCPv4 protocol in the dual stack environment, and meanwhile, for network managers, configuring and using a single DHCPv6 protocol can efficiently reduce operation and maintenance costs.

### Brief Description of Drawings

Fig. 1 is a schematic diagram of a format of extended IA_IPv4 options according to the present invention;
Fig. 2 is a schematic diagram of a format of extended IPv4 address options according to the present invention;
Fig. 3 is a schematic diagram of a format of extended IPv4 gateway address options according to the present invention;
Fig. 4 is a flowchart of a method for allocating an IP address according to an embodiment of the present invention; and
Fig. 5 is a structural diagram of a system for allocating an IP address according to an embodiment of the present invention.

### Preferred Embodiments of the Present Invention

The present invention provides a solution of IPv4 address allocation based on DHCPv6. A DHCPv6 server allocates IPv6 and IPv4 addresses simultaneously can avoid increasing of operation and maintenance costs as well as management complexity due to simultaneous deployment of DHCPv4 and DHCPv6 protocols, especially in the later period of a transition from IPv4 networks to IPv6 networks. Such an easy method for dynamically configuring the IPv4 address can be widely used.

In embodiments of the present invention, the DHCPv6 server dynamically configures and recovers the IPv4 address for a DHCPv6 client by extending new categories of DHCPv6 options and using DHCPv6 protocol interaction, and the DHCPv6 client renews, uses and actively releases the address according to a life period and an aging time of the configured IPv4 address.

The specific embodiments of the present invention will be described in detail in conjunction with accompanying drawings hereinafter.

IA_IPv4 options (i.e., IA_V4 options), IPv4 address options and IPv4 gateway address options are required be added in order to allocate the IPv4 address without influencing existing functional operations of the DHCPv6 protocol.

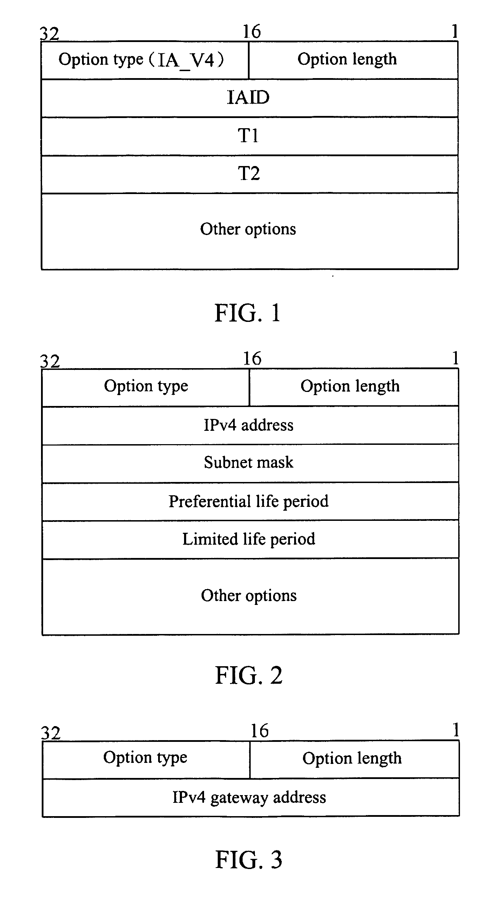

Referring to Fig. 1, IA_V4 options are illustrated. The options are used to carry an IPv4 address, and include Identity Association (IA) Identity (ID) distinguished from other IAs, time T1 and T2 for renewing, IPv4 address options, status code options, and other extension-related options. According to the design of the DHCPv6, a DHCP Unique Identifier (DUID, a unique instance identifier of the DHCPv6) of the client and the IAID are associated with an actual interface.

Referring to Fig. 2, IPv4 address options are illustrated. The options carry a single IPv4 address, and include address contents, address masks, life period parameters such as valid life period and preferential life period, wherein the meaning of the life period is the same as that of the DHCPv6. Other sub-options associated with the address, such as IPv4 gateway address options, status code options and other extension-related options, may also be included. The IPv4 address options are used as sub-options of the IA_V4 options.

Referring to Fig. 3, IPv4 gateway address options are illustrated. The options carry an IPv4 gateway address, and can be written by a relay as an reference for the DHCPv6 server to allocate the address, or can be configured by the DHCPv6 server along with the IPv4 address, wherein a default gateway of the IPv4 address is configured by the DHCPv6 client and the IPv4 gateway address options can be used as sub-options of the IPv4 address options, or can be inserted in a message by the relay device for direct use.

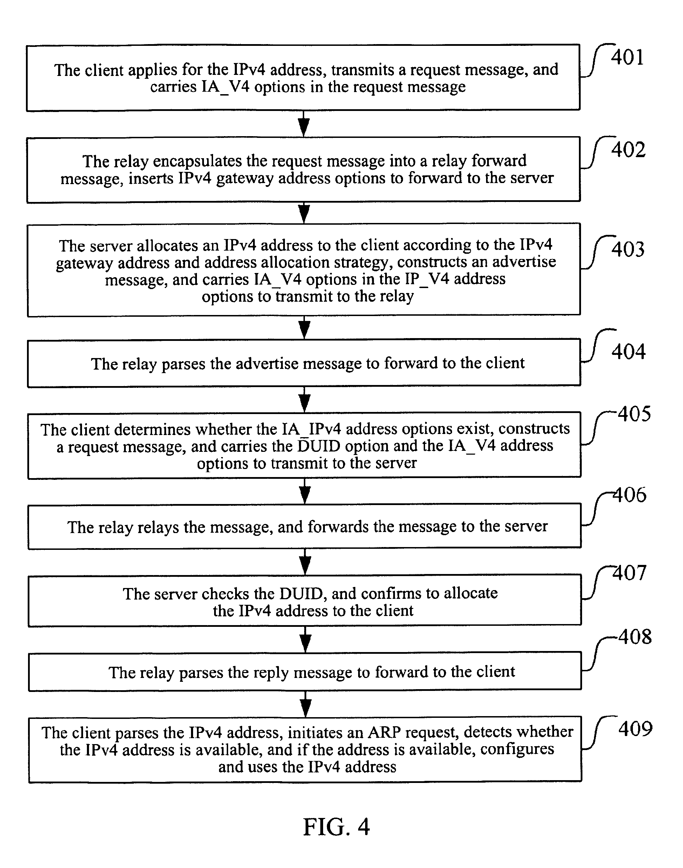

Fig. 4 illustrates a method for allocating an IP address according to an embodiment of the present invention comprises the following steps.

In the following steps, a client represents a DHCPv6 client supporting IPv4/IPv6 dual protocol stack, a relay represents a relay device, and a server represents a DHCPv6 server. Implementation steps of the client acquiring, using and releasing an IPv4 address and the server allocating and finally recovering the IPv4 address will be described below.

401. The client applies for the IPv4 address according to a configuration of a manager, transmits a request message carrying IA_V4 options to locate the server, and indicates that the server is required to allocate the IPv4 address.

402. The relay parses the request message after receiving it, discovers that the message contains the IA_V4 options, encapsulates the request message into a relay forward message, inserts IPv4 gateway address options carrying its own IPv4 address into the relay forward message, and forwards the relay forward message to the server.

If the relay does not support the IA_V4 options, then it ignores the options, does not insert the IPv4 gateway address options, and directly forwards the message.

403. The server parses an inner layer request message after receiving the relay forward message, discovers that the IA_V4 options are carried, parses outer relay options, acquires IPv4 gateway address options, allocates a suitable IPv4 address to the client according to the carried IPv4 gateway address and existing address allocation strategy, constructs an advertise message carrying IA_V4 options, the IA_V4 options containing IPv4 address options carrying the IPv4 address, the IPv4 address options carrying IPv4 gateway address options, the IPv4 gateway address options containing an IPv4 address of the relay, and encapsulates the advertise message into a relay reply message to transmit to the relay.

If the IPv4 gateway address options are not carried in the relay options, the server allocates the IPv4 address to the client according to existing methods.

If the relay is not passed by, the server will not carry the gateway addresses or carry its own IPv4 address in the advertise message; if the relay does not provide a suitable gateway address, the server can fill in an pre-configured IPv4 gateway address, or does not fill in the gateway address.

If the DHCPv6 server does not support IPv4 address allocation and can not identify the IA_V4 options, then it ignores the IA_V4 options and provides IPv6 address allocation.

404: The relay parses the advertise message to forward to the client.

405. The client receives the advertise message, parses the options provided by the server, determines whether the IA_IPv4 options exist and whether the IA_IPv4 options carry the IPv4 address options, and if the IA_IPv4 options exist, constructs a request message carrying the DUID option of the server and the IA_V4 options, the IA_V4 options containing the IPv4 address options, the IPv4 address options carrying the allocated IPv4 address, and transmits the request message to the server.

406. The relay relays the message, and encapsulates the request message into the relay forward message to forward to the server.

407. The server receives the relay forward message, parses and checks the request message, and discovers that it is the DUID of the present server, confirms to allocate the IPv4 address in the IPv4 address options carried under the IA_IPv4 options to the client, constructs a reply message, updates a lease term through the IA_IPv4 options, updates a life period through the IPv4 address options, updates the IPv4 gateway address through the IPv4 gateway address options, and encapsulates the reply message into a relay reply message to transmit to the relay.

408. The relay parses the reply message to forward to the client.

409. The client parses the reply message to parse the IPv4 address, initiates an address parse protocol (ARP) request, detects whether the IPv4 address is available, and if the address is available, records the lease term, and configures and uses the IPv4 address and the IPv4 gateway address.

If the addresses conflict, then the client constructs a decline message carrying the IA_V4 options, the IA_V4 options containing the IPv4 address options, the IPv4 address options carrying the IPv4 address, transmits the decline message to the server to decline the address, and then re-initiates an address application procedure.

If the client further needs to use the address when the lease term expires, the client initiates a renew message carrying the IA_V4 options, the IA_V4 options containing the IPv4 address options, the IPv4 address options carrying the IPv4 address, and transmits the renew message to the server to renew the address.

If the client no longer uses the address, then it constructs a release message carrying the IA_V4 options, the IA_V4 options containing the IPv4 address options, the IPv4 address options carrying the IPv4 address, and transmits the release message to the server to release the address, and the server will recover the address after receiving the message for the next use.

If the client is shut down and is offline and it neither renews the lease term nor releases the address, the server will recover the address when the valid life period of the address expires to ensure repetitive use of the address.

Through the above steps, the processes of configuring, using and recovering the IPv4 address based on the DHCPv6 protocol can be completed.

If the client requests the server to allocate the designated IPv4 address, then the client carries the IA_V4 options in the request message, carries the IPv4 address options under the IA_V4 options, records the IPv4 address which is requested to be allocated; and if the client requests the designated gateway address, then the client carries the IPv4 gateway address options under the IPv4 address options, and records the requested gateway address.

After receiving the request message, the server parses the IPv4 address which is requested to be allocated by the client, checks whether the IPv4 address is available, and if the IPv4 address is available, allocates the IPv4 address to the client, constructs an advertise message, the IPv4 address options carrying the IPv4 address, and carries the gateway address which is requested by the client in the IPv4 gateway address options under the IPv4 address options.

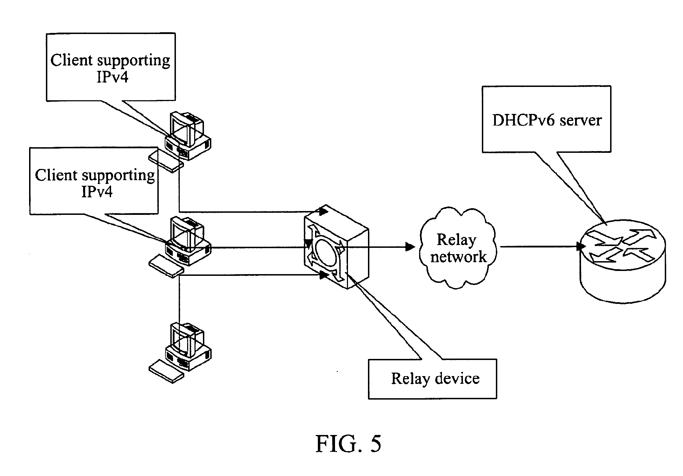

Fig. 5 illustrates a system for allocating an IP address according to an embodiment of the present invention comprising a client supporting IPv4, a relay device and a DHCPv6 server. The client, which may be a personal computer supporting IPv4/IPv6 dual protocol stack, is connected to the DHCPv6 server at distal end of the network via the relay device. The server supports IPv4 address configuration (it not necessarily supports the dual protocol stack, but may be a single DHCPv6 network). The relay device may also be in an IPv4/IPv6 dual protocol stack environment, and may be used as a default gateway of a personal computer IPv4 network.

The client transmits a request message to the DHCPv6 server, requests allocation of an IPv4 address, the request message carrying IA_IPv4 options.

The relay device receives the request message transmitted by the client, re-encapsulates the request message after parsing the IA_IPv4 options carried in the request message, and inserts the IPv4 gateway address options carrying the IPv4 address of the relay device to transmit to the DHCPv6 server.

After receiving the request message, the DHCPv6 server allocates the IPv4 address to the client according to an address allocation strategy based on the IA-IPv4 options and the IPv4 address of the relay device, and transmits the IPv4 address to the client by extending the IA_IPv4 address allocated to the client which is carried by the IPv4 address options in a response message, the response message transmitted to the client carrying IA_IPv4 gateway address options, the IA_IPv4 gateway address options containing the IPv4 gateway address. The IPv4 gateway address may be the IPv4 address of the relay device or the IPv4 address of the DHCPv6 server or a pre-configured IPv4 gateway address.

Referring to the description of the content of the method, other functions of network elements in the system are described.

The above description is only the preferred embodiments of the present invention and is not intended to limit the present invention. The present invention can have various modifications and variations for those skilled in the art. Any modification, equivalent substitution and improvement made within the spirit and principle of the present invention should be covered within the protection scope of the present invention.

### Industrial Applicability

Compared with the related art, in an IPv4/IPv6 dual protocol stack environment, the present invention allows the system to dynamically configure the IPv4 address flexibly and easily to reduce the dependency of IPv4 services on a DHCPv4 protocol in the dual stack environment, and meanwhile, for network managers, configuring and using a single DHCPv6 protocol can efficiently reduce operation and maintenance costs.

## Claims

1. A method for allocating an IP address comprising the step of:
a client supporting Internet Protocol version 4 (IPv4) transmitting a request message to a Dynamical Host Configuration Protocol version 6 (DHCPv6) server to request allocation of an IPv4 address, the request message carrying Identity Association (IA)_IPv4 options; and
the DHCPv6 server allocating the IPv4 address to the client according to an address allocation strategy based on the IA-IPv4 options after receiving the request message, and transmitting the allocated IPv4 address to the client.

2. The method according to claim 1, wherein the step of the DHCPv6 server transmitting the allocated IPv4 address to the client comprises:
the DHCPv6 server transmitting the IPv4 address to the client by carrying the IA_IPv4 options in a response message sent to the client and extending the IPv4 address allocated to the client which is carried in IPv4 address options under the IA_IPv4 options.

3. The method according to claim 2, wherein
the client is connected to the DHCPv6 server through a relay device;
the method further comprises: the relay device receiving the request message transmitted by the client to the DHCPv6 server, re-encapsulating the request message after parsing the IA_IPv4 options carried in the request message, inserting IPv4 gateway address options in the re-encapsulated message and transmitting the re-encapsulated message to the DHCPv6 server;
the step of the DHCPv6 server allocating the IPv4 address to the client according to the address allocation strategy comprises: the DHCPv6 server receiving the re-encapsulated message from the relay device, and allocating the IPv4 address to the client according to the address allocation strategy based on an IPv4 gateway address in the IPv4 gateway address options encapsulated by the relay device after parsing the IA_IPv4 options in the re-encapsulated message.

4. The method according to claim 3, further comprising:
the DHCPv6 server extending the IPv4 gateway address options in the IPv4 address options extended under the IA_IPv4 options carried in the response message, the extended IPv4 gateway address options carrying the IPv4 gateway address, and the IPv4 gateway address being an IPv4 gateway address in the IPv4 gateway address options encapsulated by the relay device.

5. The method according to claim 2, further comprising:
the DHCPv6 server extending the IPv4 gateway address options in the IPv4 address options extended under the IA_IPv4 options carried in the response message, the extended IPv4 gateway address options carrying the IPv4 gateway address, and the IPv4 gateway address being an IPv4 address of the DHCPv6 server or a pre-configured IPv4 gateway address.

6. The method according to claim 4 or 5, further comprising:
the client receiving the response message, determining whether the IA_IPv4 options exist in the response message, and if the IA_IPv4 options exist and the IPv4 address options is carried in the IA_IPv4 options, transmitting a acknowledge message to the DHCPv6 server, the acknowledge message carrying a DHCP Unique Identifier (DUID) of the DHCPv6 server and the IA_IPv4 options, and the IA_IPv4 options carrying the IPv4 address options;
the DHCPv6 server checking whether the DUID contained in the message is its own DUID after receiving the acknowledge message, and if yes, allocating the IPv4 address in the IPv4 address options to the client and transmitting a reply message to the client.

7. The method according to claim 6, further comprising:
the DHCPv6 server carrying the IA_IPv4 options in the reply message, carrying the IPv4 address options under the IA_IPv4 options, and carrying the IPv4 gateway address options under the IPv4 address options, the IA_IPv4 options containing a lease term, the IPv4 address options containing a life period, and the IPv4 gateway address options containing the IPv4 gateway address; and
after receiving the reply message, the client initiating an address parse protocol (ARP) request, detecting whether the IPv4 address carried in the IPv4 address options is available, and if available, recording the lease term and the life period, and configuring and using the IPv4 address and IPv4 gateway address.

8. The method according to claim 2, wherein
if the client requests the DHCPv6 server to allocate a designated IPv4 address, the client contains the designated IPv4 address into the IPv4 address options carried in the IA_IPv4 options in the request message when transmitting the request message;
the method further comprises: the DHCPv6 server parsing the designated IPv4 address carried in the IPv4 address options, checking whether the designated IPv4 address is available, and if available, directly allocating the designated IPv4 address to the client.

9. The method according to claim 2, wherein
if the client requests a designated IPv4 gateway address from the DHCPv6 server, the client carries the IPv4 gateway address options in the IPv4 address options carried under the IA_IPv4 options in the request message when transmitting the request message, the IPv4 gateway address options containing the designated IPv4 gateway address;
the method further comprises: when transmitting the IPv4 address allocated to the client through the response message to the client, the DHCPv6 server carrying the IPv4 gateway address options under the IPv4 address options of the IA_IPv4 options carried in the response message, the IPv4 gateway address options containing the designated IPv4 gateway address.

10. A system for allocating an IP address comprising a client supporting IPv4 and a DHCPv6 server, wherein
the client supporting the IPv4 is configured to transmit a request message to the DHCPv6 server to request allocation of an IPv4 address, the request message carrying Identity Association (IA)_IPv4 options; and
the DHCPv6 server is configured to allocate the IPv4 address to the client according to an address allocation strategy based on the IA-IPv4 options after receiving the request message, and transmit the allocated IPv4 address to the client.

11. The system according to claim 10, wherein the DHCPv6 server is configured to transmit the allocated IPv4 address to the client by carrying the IA_IPv4 options in a response message transmitted to the client and extending the IPv4 address allocated to the client which is carried in the IPv4 address options under the IA_IPv4 options.

12. The system according to claim 11, further comprising a relay device;
the repay device configured to connect the client with the DHCPv6 server, receive the request message transmitted by the client, re-encapsulate the request message after parsing the IA_IPv4 options carried in the request message, insert IPv4 gateway address options in the re-encapsulated message and transmit the re-encapsulated message to the DHCPv6 server; and
the DHCPv6 server is configured to allocate the IPv4 address to the client according to the address allocation strategy based on an IPv4 gateway address in the IPv4 gateway address options encapsulated by the relay device after parsing the IA_IPv4 options in the re-encapsulated message;
the DHCPv6 server is further configured to extend the IPv4 gateway address options in the IPv4 address options extended under the IA_IPv4 options carried in the response message, the extended IPv4 gateway address options carrying the IPv4 gateway address, and the IPv4 gateway address being an IPv4 gateway address in the IPv4 gateway address options encapsulated by the relay device or an IPv4 address of the DHCPv6 server or an pre-configured IPv4 gateway address.
